## Europäisches Patentamt
## European Patent Office
## Office européen des brevets

(11) Numéro de publication: **0 267 114**
**B1**

(12) **FASCICULE DE BREVET EUROPEEN**

(51) Int. Cl.⁵: **G07F 7/10**, G06F 1/00

(45) Date de publication du fascicule du brevet:
05.09.90

(21) Numéro de dépôt: **87402472.2**

(22) Date de dépôt: **03.11.87**

(54) Circuit intégré pour la mémorisation et le traitement d'informations de manière confidentielle comportant un dispositif anti-fraude.

(30) Priorité: **07.11.86 FR 8615577**

(43) Date de publication de la demande:
**11.05.88 Bulletin 88/19**

(45) Mention de la délivrance du brevet:
**05.09.90 Bulletin 90/36**

(84) Etats contractants désignés:
**DE ES FR GB IT NL**

(56) Documents cités:
**EP-A- 168 836**
**EP-A- 0 113 590**
**EP-A- 0 145 405**
**GB-A- 2 088 605**
**US-A- 4 211 919**

IEEE Spectrum,février 84,page 42-49,"Smart Credit Card;the answer to cashless shopping",S.B.WEINSTEIN

(73) Titulaire: **THOMSON COMPOSANTS MILITAIRES ET SPATIAUX, 173, Bd Haussmann, F-75008 Paris(FR)**

(72) Inventeur: **Lisimaque, Gilles, THOMSON-CSF SCPI 19, avenue de Messine, F-75008 Paris(FR)**
Inventeur: **Sourgen, Laurent, THOMSON-CSF SCPI 19, avenue de Messine, F-75008 Paris(FR)**

(74) Mandataire: **Guérin, Michel et al, THOMSON-CSF SCPI, F-92045 PARIS LA DEFENSE CEDEX 67(FR)**

ACTORUM AG

## Description

La présente invention a pour objet un circuit intégré pour la mémorisation et le traitement d'informations de manière confidentielle comportant un dispositif anti-fraude. Elle concerne plus particulièrement, mais non exclusivement, les circuits intégrés du type ci-dessus connus sous la dénomination de cartes à mémoire.

Les cartes à mémoire sont réalisées avec un circuit intégré électronique comportant essentiellement une mémoire non volatile programmable électriquement comprenant souvent des données confidentielles non-modifiables, des moyens d'entrée/sortie permettant d'accoupler le circuit à un dispositif de transfert de données et des moyens de traitement interconnectés entre les moyens d'entrée-sortie et la mémoire. Dans certaines applications des cartes à mémoire, il est impératif de protéger l'accès à certaines zones de la mémoire non volatile par une clé d'accès telle qu'un code confidentiel associé à certains droits de lecture ON d'écriture dans ces zones spécifiques. Il existe de nombreux dispositifs permettant de dissuader les fraudeurs qui cherchent à découvrir le code secret ou la clé d'accès à une mémoire par essais successifs, dont certains sont décrits dans le document "Smart Credit Card; the Answer to Cashless Shopping", S.B. Weinstein, IEEE Spectroum, (février 1984) Pages 43–49.

Il est également connu de l'art antérieur par le document GB-A 2 088 605, un dispositif comprenant un élément d'identification par code d'autorisation confidentielle, ce dispositif utilisant des capacités qui empêchent la réalisation en circuit intégré dudit dispositif.

Parmi ces dispositifs, le plus connu est sans doute celui qui mémorise d'une façon permanente les erreurs de présentation de clé et bloque le fonctionnement du circuit dès que le nombre des erreurs dépasse une valeur prédéterminée. A de tels dispositifs on ajoute généralement une logique qui empêche de contrôler le passage d'une clé bonne par observation des variations des courants d'alimentation du circuit. Le fraudeur ne peut donc pas être informé du résultat des essais qu'il entreprend.

Or de tels dispositifs nécessitent une place en mémoire relativement importante pour enregistrer les tentatives correctes qui sont en fait les plus fréquentes. Dans le cas où la carte a des fonctions relativement simples, un traitement aussi complexe et qui demande beaucoup de place sur le composant, ne se justifie pas. On hésite donc, à utiliser un tel dispositif anti-fraude. Par ailleurs il est demandé dans certaines applications, au contraire, de renforcer le dispositif de protection anti-fraude.

Le dispositif selon la présente invention permet d'apporter une solution simple à ces problèmes, il permet donc dans le cas d'applications simples de la carte, de se substituer aux dispositifs de l'art connu, où d'être combiné à ces dispositifs dans le cas d'applications plus complexes.

Dans la définition de la présente invention, on précisera pour l'homme de l'art les points ci-après :

Par traitement d'informations, on entend soit le simple transfert de données entre le circuit intégré et un système extérieur, soit le transfert et l'exécution d'un certain nombre d'opérations à l'intérieur du circuit lui-même.

Par comparateur, on entend non seulement un simple comparateur effectuant la comparaison entre les données d'habilitation et le code confidentiel ou clé d'accès, mais aussi tout système qui, à partir des données d'habilitation ou du code confidentiel ou clé d'accès, effectue un certain nombre d'opérations en vue d'autoriser la poursuite des opérations.

Par moyen de traitement, on entend tous les circuits nécessaires à l'écriture et la lecture des données dans la mémoire ainsi qu'au traitement de ces données et au contrôle d'accès aus fonctions du circuit intégré. De manière générale, les moyens de traitement sont constitué par microprocesseur muni de ses circuits annexes bien connus de l'homme de l'art.

D'autres caractéristiques et avantages de l'invention apparaîtront à la lecture de la description qui suit et qui se réfère aux dessins annexés, donnés uniquement à titre d'exemple non limitatif et dans lesquels :

- la figure 1, représente le schéma du circuit intégré selon la présente invention,
- la figure 2, représente un exemple de réalisation du circuit selon la figure 1,
- la figure 3, représente un exemple de réalisation du circuit de temporisation selon la figure 2.

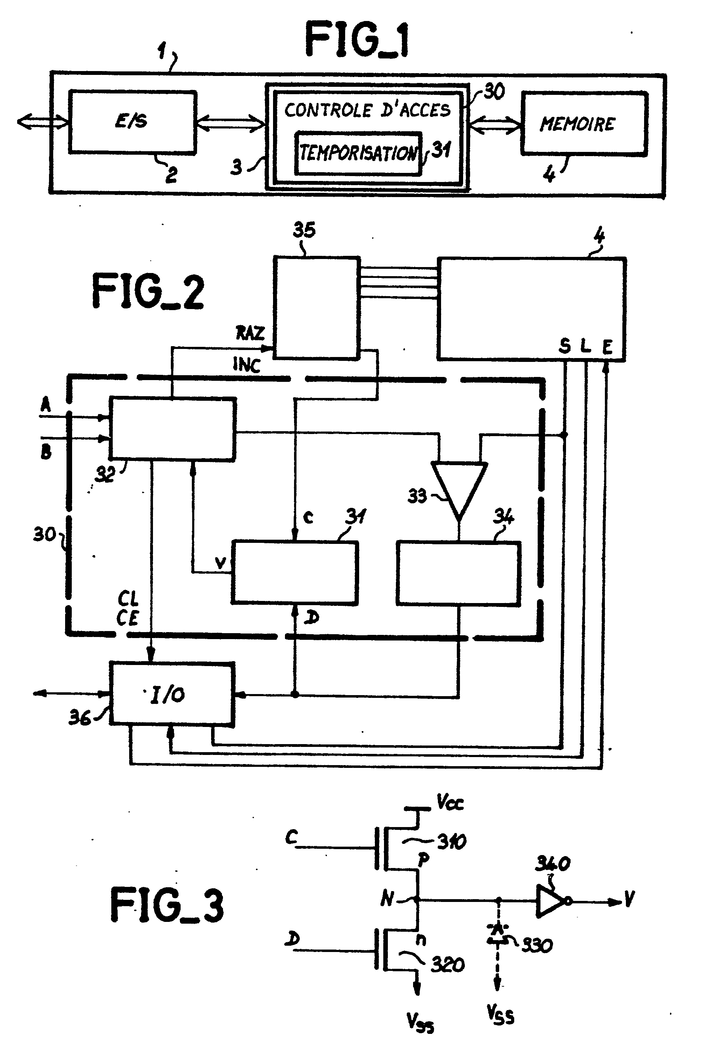

Sur la figure 1, on a représenté à titre d'exemple, une carte à mémoire 1, utilisant un circuit intégré mettant en oeuvre la présente invention.

La carte à mémoire représentée sur la figure 1 comporte essentiellement un dispositif d'entrée/sortie 2 permettant d'accoupler la carte à un dispositif de transfert de données extérieur ; des moyens de traitement 3 comprenant entre autre un dispositif de contrôle d'accès 30 aux fonctions de la carte ; une mémoire non volatile programmable électriquement 4. Les moyens de traitement 3 sont interconnectés entre le dispositif d'entreé/sortie 2 et la mémoire 4. Le dispositif de contôle d'accès 30 comporte un dispositif de temporisation 31 qui permet d'imposer un délai minimum prédéterminé entre deux tentatives d'introduction d'un code confidentiel même si la tension d'alimentation du circuit est coupée entre ces deux essais. Le délai est choisi de sorte que le probabilité d'obtenir ce code pour un utilisateur qui ne le connaîtrait pas, soit quasiment nulle.

Sur la figure 2, on a représenté un exemple particulier de réalisation d'une carte dans laquelle l'organe de traitement 3 comporte entre autre un circuit d'adressage des points mémoires, ce circuit étant constitué par un compteur 35. Cet organe 3 comporte également un circuit logique de commande de lecture et/ou d'écriture 36 de la mémoire 4. Le circuit 36 permet sur un ordre logique provenant d'un décodeur 32, de lire dans la mémoire le bit adressé ou d'écrire dans cette mémoire à l'adresse prévue un bit de donnée. Les entrées et sortie I/O sont reliées au circuit de transfert pour, respectivement, recevoir des données à écrire ou transmettre des données lues.

L'organe de contrôle d'accès 30 comporte le décodeur de signaux de commande A et B transmis par le dispositif d'entrée/sortie.

L'organe de contrôle comporte également un comparateur 33 relié au décodeur 32 et à la sortie de données S de la mémoire 4. La sortie du comparateur 33 est reliée à l'entrée d'un bascule 34. La sortie de la bascule 34 est reliée à une entrée du circuit de temporisation 31 et à une entrée du circuit logique de lecture/écriture 36. Le circuit de temporisation 31 est relié par une autre entrée à une sortie du compteur 35 et est relié par sa sortie à une entrée du décodeur 32.

Selon que le signal A, correspond pour le décodeur à un état logique 1 ou 0, le décodeur 32 effectue soit une remise à zéro RAZ du compteur 35 soit une incrémentation INC de ce compteur.

Le signal B correspond au code confidentiel introduit. La détection du premier bit du code confidentiel, traduite par un état logique 0 ou 1 du signal A, déclenche le comptage. A chaque incrémentation, l'état logique des sorties du compteur permet d'adresser dans la zone de la mémoire dans laquelle le code d'habilitation a été stocké, un bit de ce code d'habilitation. Le décodeur envoie un ordre logique CL (ou CE) qui est traduit par la logique 36 par un ordre de lecture CL, (CE étant traduit par un ordre d'écriture).

Le bit lu à l'adresse présentée est transmis à une entrée d'un comparateur 33 qui reçoit à une autre entrée le bit correspondant du code confidentiel provenant du décodeur 32. Si les deux bits sont identiques la sortie du comparateur ne modifie pas l'état de la bascule 34. La déctection du dernier bit du code confidentiel par le compteur 35 provoque un état logique à l'une de ses sortie (signal C) qui déclenche le chargement du circuit de temporisation 31. Si aucun changement d'état n'a eu lieu dans la bascule pour un mot donné, c'est-à-dire si l'état logique de la sortie de la bascule est resté le même pour chaque bit du mot, cet état provoque un déchargement (signal D) simultané au chargement.

Lorsque deux bits présents aux entrées du comparateur sont différents, la bascule change d'état. Le changement d'état de sa sortie empêche le déchargement qui s'opérait simultanément au chargement dans le circuit de temporisation 31. Le circuit 31 se charge par conséquent dès détection du dernier bit du code confidentiel et ne se déchargera qu'au bout d'un durée $\underline{d}$ prédéterminée. Pendant toute cette durée, le décodeur qui reçoit le signal V de sortie du circuit de temporisation est bloqué par l'état de ce signal. Ainsi pendant toute cette durée $\underline{d}$ aucun code confidentiel ne pourra être pris en compte pour être comparé au code d'habilitation stocké dans la mémoire même si la tension d'alimentation du circuit est coupée pendant le temps $\underline{d}$.

Sur la figure 3, on a représenté un exemple de réalisation particulier du circuit de circuit de temporisation 31. Ce circuit comporte avantageusement deux transistors 310,320 à effet de champ à technologie CMOS ou NMOS. Les transistors sont en série. Le transistor 310 est relié à un niveau de tension $V_{CC}$ et le transistor 320 est relié à un niveau de tension $V_{SS}$. Une diode 330 dont la cathode est reliée au point de jonction des deux transistors et dont l'anode est reliée au potentiel $V_{SS}$ permet d'introduire la temporisation. La diode a été représentée en traits pointillés car il ne s'agit pas d'un composant spécifique. La diode qui existe intrinsèquement et qui est constituée par exemple par la jonction entre le drain du transistor 320 et le substrat permet d'obtenir la temporisation désirée.

Lorsque le compteur 35 arrive à la valeur $2^n$ (soit 32 pour donner un exemple de code sur 32 bits), quelque soit la succession de commandes qui aient été représentées à l'entrée du décodeur 32, le noeud N est chargé par la mise en conduction du transistor 310 à la tension d'alimentation $V_{CC}$, la grille de ce transistor ayant été activée par le signal C.

Lorsque la bascule 34 a conservé un même état, par exemple un état de repos, pendant les comparaisons successives de chaque bit du code confidentiel avec chaque bit du code d'habilitation, le transistor 320 qui est activé par le signal D, conduit. Le noeud N est donc déchargé par conduction à $V_{SS}$ du transistor 320.

Lorsque la bascule 34 a changé d'état en cours d'opération de comparaison, le transistor 320 n'est pas activé par le signal D car celui-ci n'a pas le niveau requis et le noeud N reste donc chargé.

L'état logique du noeud N lorsqu'il est chargé permet par l'intermédiaire d'une porte inverseuse 340 qui applique un signal V de niveau logique requis, de bloquer le décodeur 32. Le noeud N se décharge alors pas les fuites de la diode 330 vers le substrat sur lequel les transistors ont été implantés. La décharge s'effectue pendant une durée qui est fonction de la technologie des composants utilisés, elle peut varier entre 0,1 seconde et 1 seconde et n'est pas influencé par une mise hors tension sous tension du circuit.

Lorsque le courant passant dans la diode devient suffisamment faible, le noeud est déchargé, et le niveau logique à l'entrée de la porte permet, par l'intermédiaire de la porte 340, d'envoyer un signal V apte à déverrouiller le décodeur 32.

La temporisation obtenue, qui peut donc être de l'ordre de 0,1 à 1 seconde, impose dans le cas où on utilise un code sur 32 bits, 13 à 130 ans pour passer tous les codes possibles soit 4.294.967.296 codes.

Dans le cas où cette temporisation est 0,1s (cas le plus favorable pour un fraudeur), le fraudeur ne pourra présenter que 864 000 codes par jour ce qui représente une chance sur 4 971 de trouver le code correct. Il faut donc 0,5 jours de présentation ininterrompue pour voir cette probabilité tomber à une chance sur 10 000.

Il est évident qu'un code sur 64 bits rend encore moins probable la probabilité de découverte de ce code par un éventuel fraudeur.

**Revendications**

1. Circuit intégré pour la mémorisation et le traitement d'informations de manière confidentielle comprenant:
   - une mémoire (4) non volatile programmable électriquement, contenant entre autre des données d'habilitation;
   - des moyens d'entrée/sortie (2) permettant d'accoupler le circuit à un dispositif de transfert de données;
   - des moyens de traitement interconnectés entre les moyens d'entrée/sortie (2) et la mémoire (4) ces moyens étant munis d'un compteur d'adresse (35), une logique de commande de lecture ou d'écriture (36), un circuit de contrôle d'accès (30);
   - un circuit de temporisation (31) imposant un délai minimum prédéterminé entre deux tentatives d'introduction d'un code confidentiel; ledit circuit de contrôle d'accès (30) comprenent le circuit de temporisation (31), un comparateur (33), une bascule (34), et un décodeur des codes introduits (32); ledit circuit de temporisation (31) étant susceptible d'être chargé par un signal (C) émis par le compteur d'adresse (35) à la réception du dernier bit de codage du code confidentiel; ce circuit (31) étant susceptible d'être déchargé par le signal (D) de sortie de la bascule (34) qui traduit le résultat de comparaison entre chaque bit de codage du code confidentiel et chaque bit des données d'habilitation dans la mémoire: ledit circuit de temporisation étant susceptible d'émettre un signal de verrrouillage (V) au décodeur (32), de durée prédéterminée même dans le cas de coupures du courant d'alimentation du circuit entre deux tentatives d'introduction d'un code confidentiel;
   - le circuit intégré étant caractérisé en ce que le circuit de temporisation (31) comporte un premier (310) et un deuxième (320) transistors à effet de champ, la grille du premier transistor étant activée par le signal de charge (C), émis par le compteur d'adresse (35) à la réception du dernier bit de codage du code confidentiel, la grille du deuxième transistor étant activée par le signal de décharge (D) provenant de la bascule (34), deux électrodes principales étant reliées entre-elles, tandis que les autres électrodes principales sont reliées l'une à un premier potentiel (Vcc), l'autre à un deuxième potentiel (Vss), le dispositif comportant également une diode (330) dont la cathode est reliée au point commun (N) des deux électrodes principales et l'anode est reliée au deuxième potentiel (Vss).

2. Circuit intégré selon la revendication 1, caractérisé en ce que la diode (330) est constituée par jonction intrinsèque existant entre le drain ou le cas échéant la source du deuxième transistor (320) et le substrat.

**Patentansprüche**

1. Integrierte Schaltung zum geheimen Speichern und Verarbeiten von Informationen, mit – einem nichtflüchtigen, elektrisch programmierbaren Speicher (4), der unter anderem Zugrifferlaubnisdaten enthält;
   - Eingangs-/Ausgangsmitteln (2), die die Kopplung der Schaltung an eine Vorrichtung zum übertragen der Daten ermöglichen;
   - Verarbeitungsmitteln, die zwischen die Eingangs-/Ausgangsmittel (2) und den Speicher (4) geschaltet sind und mit einem Adressenzähler (35), einer Lese- oder Schreibsteuerlogik (36) und einer Zugriffkontrollschaltung versehen sind;
   - einer Verzögerungsschaltung (31), die zwischen zwei Versuchen zur Eingabe eines Geheimkodes eine vorgegebene minimale Wartedauer festlegt;
   - wobei die Zugriffkontrollschaltung die Verzögerungsschaltung (31), einen Komparator (33), eine Kippschaltung (34) und einen Decodierer (32) für die eingegebenen Kodes aufweist;
   - wobei die Verzögerungsschaltung (31) geeignet ist, durch ein vom Adressenzähler bei Empfang des letzten Bits der Kodierung des Geheimkodes ausgegebenes Signal (C) aktiviert zu werden;
   - wobei diese Schaltung (31) geeignet ist, durch das Signal (D) des Ausgangs der Kippschaltung (34), das das Ergebnis des Vergleichs zwischen jedem Bit der Kodierung des Geheimltodes und jedem Bit der Zugrifferlaubnisdaten im Speicher übersetzt, deaktiviert zu werden;
   - wobei die Verzögerungsschaltung geeignet ist, an den Dekodierer (32) ein Verriegelungssignal (V) von vorgegebener Dauer selbst dann auszugeben, wenn die Stromversorgung zwischen zwei Versuchen zur Eingabe eines Geheimkodes unterbrochen wird;
   - wobei die integrierte Schaltung dadurch gekennzeichnet ist, daß die Verzögerungsschaltung (31) einen ersten (310) und einen zweiten (320) Feldeffekttransistor aufweist, das Gate des ersten Transistors durch das vom Adressenzähler (35) bei Empfang des letzten Bits der Kodierung des Geheimkodes ausgegebene Aktivierungssignal (C) aktiviert wird, das Gate des zweiten Transistors durch das von der Kippschaltung (34) kommende Deaktivierungssignal (D) aktiviert wird, zwei Hauptelektroden miteinander verbunden sind, während eine der anderen Hauptelektroden mit einem ersten Potential (Vcc) und die andere mit einem zweiten Potential (Vss) verbunden ist, und die Vorrichtung außerdem eine Diode (330) aufweist, deren Kathode mit einem gemeinsamen Punkt (N) der zwei Hauptelektroden und deren Anode mit dem zweiten Potential (Vss) verbunden ist.

2. Integrierte Schaltung gemäß Anspruch 1, dadurch gekennzeichnet, daß die Diode (330) von einem Eigenleitungsübergang gebildet wird, der zwischen dem Drain oder gegebenenfalls der Source des zweiten Transistors (320) und dem Substrat besteht.

## Claims

1. An integrated circuit for storing and processing information in a confidential manner comprising:
   - an electrically programmable read only memory (4) containing in inter alia enabling data;
   - input/output means (2) allowing coupling of the circuit with a data transfer device;
   - processing means interconnected between the input/output means (2) and the memory (4), said means being provided with an address counter (35), a logic control unit for reading or writing (36), and an access control circuit (30);
   - a timing circuit (31) imposing a minimum delay between two attempts at introduction of a confidential code; the said access control circuit (30) comprising the timing circuit (31), a comparator (33), a flip-flop (34), an introduced code decoder (32); the said timing circuit (31) being adapted to be charged by a signal (C) provided from the address counter (35) on the reception of the last encoding bit of the confidential code; this circuit (31) being adapted to be discharged by the output signal (D) of the flip-flop (34) which translates the result of comparison between each encoding bit of the confidential code and each bit of the enabling data in the memory; the said timing circuit being adapted to provide a latching signal (V) to the decoder (32), with a predetermined duration even in the event of there being an interruption of the supply power of the circuit between two attempts at the introduction of a confidential code;
   - the integrated circuit being characterized in that the timing circuit (31) comprises a first (310) and a second (320) field effect transistor, the gate of the first transistor being activated by the load signal (C) provided by the address counter (35) on the reception of the last encoding bit of the confidential code, the gate of the second transistor being activated by the discharge signal (D) originating from the flip-flop (34), two principal electrodes being connected with each other, whereas the other principal electrodes are connected in one case to a first potential ($V_{CC}$) and in the other case with a second potential ($V_{SS}$), the device furthermore comprising a diode (330) whose cathode is connected with a common point (N) of the two principal electrodes and of which the anode is connected with the second potential ($V_{SS}$).

2. The integrated circuit as claimed in claim 1, characterized in that the diode (330) is constituted by the intrinsic junction existing between the drain or, if applicable, the source of the second transistor (320) and the substrate.

5

# FIG_1

# FIG_2

# FIG_3